# EUROPÄISCHE PATENTSCHRIFT

(11) **EP 1 286 811 B1**
(45) Veröffentlichungstag und Bekanntmachung des Hinweises auf die Patenterteilung: **20.10.2004**
(21) Anmeldenummer: 01942858.0
(22) Anmeldetag: 08.06.2001
(51) Int. Cl.: B29B 9/06

(54) **EINRICHTUNG ZUM ANDRÜCKEN DER MESSER AN DIE LOCHPLATTE EINER GRANULIERVORRICHTUNG**
ARRANGEMENT FOR PRESSING THE BLADES TOWARDS THE PERFORATED PLATE OF A GRANULATING DEVICE
DISPOSITIF POUR PRESSER DES LAMES VERS UNE PLAQUE PERFOREE D'UN DISPOSITIF DE GRANULATION

(30) Priorität: 09.06.2000 AT 10082000
(43) Veröffentlichungstag der Anmeldung: 05.03.2003
(73) Patentinhaber: Bacher, Helmut, 4490 St. Florian (AT); Schulz, Helmuth, 4020 Linz (AT); Wendelin, Georg, 4033 Linz (AT)
(72) Erfinder: Bacher, Helmut, 4490 St. Florian (AT); Schulz, Helmuth, 4020 Linz (AT); Wendelin, Georg, 4033 Linz (AT)
(74) Vertreter: Wildhack, Helmut, Dipl.-Ing. Dr.
(86) Internationale Anmeldenummer: PCT/AT2001/000189
(87) Internationale Veröffentlichungsnummer: WO 2001/094088

(56) Entgegenhaltungen:
- EP-A- 0 418 941
- EP-A- 0 972 622
- DE-C- 4 408 235
- US-A- 3 912 434
- US-A- 4 529 370
- US-A- 5 330 340
- US-A- 5 360 585

## Beschreibung

Die Erfindung bezieht sich auf eine Einrichtung an Granuliervorrichtungen, insbesondere für Kunststoffmaterial, zur Andrückung zumindest eines von einer zur Drehbewegung um ihre Achse von einem Motor angetriebenen Welle getragenen, um diese Achse umlaufenden Messers an die Lochplatte der Granuliervorrichtung, wobei zumindest der das oder die Messer tragende Abschnitt der Welle in ihrer Achsrichtung längsverschiebbar gelagert ist und eine Überwachungseinrichtung für eine von der Messerandrückung an die Lochplatte abhängige Betriebsgröße des Motors vorgesehen ist, und wobei an diese Überwachungseinrichtung eine Verstellvorrichtung zur Längsverschiebung der Messerwelle angeschlossen ist.

Bei Granuliervorrichtungen, bei welchen umlaufende Messer die aus den Austrittsöffnungen der Lochplatte austretenden Stränge, insbesondere Stränge aus thermoplasitischem Kunststoffmaterial, in Teilchenform abschlagen, ist es wichtig, dass diese Messer spaltfrei an der Lochplatte anliegen, zweckmäßig an die Lochplatte angedrückt sind. Andernfalls können nämlich Stränge aus niederviskoser Masse nicht einwandfrei geschnitten werden. Bisher hat man die Messer mittels Federn oder einer Hydraulik oder Pneumatik an die Lochplatte angedrückt oder die die Messer tragende Welle so weit gegen die Lochplatte vorgeschoben, dass die Messer gebogen werden und dadurch mit dem gewünschten Druck an der Lochplatte anliegen. Beide Konstruktionen haben Nachteile. Federn neigen zur Ermüdung und zum Bruch, eine Hydraulik bzw. Pneumatik bedingt hohen Aufwand. Die Andrückung der Messer unter Verbiegung derselben ist unzuverlässig, da die Messer im Laufe der Zeit abgenützt werden und sich damit der Andruck ändert.

Eine Vorrichtung der eingangs geschilderten Art ist aus EP-A-418 941 bekannt Hiebei wird die Leistungsaufnahme des Motors dazu herangezogen, die beim Messerumlauf einer Unterwassergranuliervorrichtung entstehende hydrodynamische Kraft auszugleichen. Dies löst die oben geschilderten Probleme nur unvollkommen, insbesondere nicht das Problem der Messerabnützung.

Die Erfindung setzt sich zur Aufgabe, eine Einrichtung der eingangs geschilderten Art so zu verbessern, dass eine verlässliche und möglichst gleichmäßige und zeitlich konstante Andrückung der Messer an die Lochplatte der Granuliervorrichtung erzielt wird, sodass eine laufende Nachstellung der Messer bei ihrer Abnützung gewährleistet ist. Die Erfindung löst diese Aufgabe dadurch, dass die Verstellvorrichtung einen Servomotor aufweist, dessen Abtriebswelle über ein Getriebe mit der die Messer tragenden Welle zu deren Nachstellung bei Messerabnützung verbunden ist. Dadurch wird eine laufende Kontrolle der Messerandrückung bzw. eine Nachstellung auf den gewünschten Wert erzielt. Wenn sich also das Messer abnützt oder die Messer abnützen, so wird die Anpresskraft entsprechend geringer, was sich sofort in einer Änderung der Betriebsgröße des Motors bemerkbar macht. Stellt die Überwachungseinrichtung fest, dass die von der Messerandrückung abhängige Betriebsgröße des Motors unter einen vorbestimmten, in die Überwachungseinrichtung eingegebenen Wert abfällt, so veranlasst die Überwachungseinrichtung eine automatische Nachstellung der Messerwelle. Auf diese Weise ist es möglich, stets den gewünschten Anpressdruck des Messers bzw. der Messer an die Lochplatte aufrecht zu erhalten, auch nach einer allfälligen Öffnung und Wiederschließung des Granuliergehäuses, denn auch dann ist dafür gesorgt, dass wieder der Ausgangswert der Betriebsgröße bzw. ein vorbestimmtes Intervall dieser Betriebsgröße erreicht wird. Vorteilhaft ist hierbei, dass die Messer nicht abgefedert werden müssen, es genügt vielmehr die Federung jedes Schneidmessers selbst. Ein weiterer Vorteil der Erfindung besteht in der Möglichkeit, handelsübliche Bauteile mit geringem Aufwand verwenden zu können.

Gemäß einer bevorzugten Ausführungsform der Erfindung ist die Betriebsgröße das vom Motor aufzubringende Drehmoment oder seine Stromaufnahme. Beide Betriebsgrößen lassen sich leicht erfassen, sie stehen ja in unmittelbarem Zusammenhang. Es ist jedoch auch die Motordrehzahl als ausnutzbare Betriebsgröße denkbar. Nützt sich also während des Betriebes das Messer ab, so verringert sich die überwachte Betriebsgröße, insbesondere das Drehmoment bzw. die Stromaufnahme des Antriebsmotors der Messerwelle. Unterschreitet die überwachte Betriebsgröße einen vorgegebenen Wert, dann sorgt der Servomotor für eine automatische Nachstellung, also für eine entsprechende Korrektur und schiebt die Messerwelle in Richtung zur Lochplatte so weit vor, dass die überwachte Betriebsgröße des Motors wieder im vorbestimmteni Intervall liegen. Im laufenden Betrieb der Vorrichtung zeigt die Überwachung an, ob die Nachstellung ausreichend war.

Die Erfindung ist anwendbar sowohl auf Vorrichtungen, bei welchen die Messerwelle nur ein einziges Messer trägt, als auch auf solche Granutiervorrichtungen, bei welchen mehrere Messer auf einer gemeinsamen Messerwelle sitzen, wie dies zumeist der Fall ist. Stets wird jedes Schneidmesser an die Lochplatte immer mit der annähernd gleichen Anpresskraft angedrückt und selbständig nachgestellt.

Eine besonders vorteilhafte Konstruktion besteht im Rahmen der Erfindung darin, dass der die Messer tragende Wellenabschnitt in einer Hülse drehbar gelagert ist, die in einem Stutzen eines Gestells längsverschieblich gelagert ist und über das Getriebe vom Servomotor verstellt wird. Der Stutzen ist hierbei zweckmäßig an einem Granuliergehäuse befestigt. Ein solches Granuliergehäuse, das einen Teil des Gestelles bildet, umgibt die Welle in bekannter Weise und es mündet eine Kühlmittelzuleitung für das Granulat in dieses Gehäuse, aus welchem das abgeschlagene Granulat zusammen mit dem Kühlmittel durch einen Auslass abgeführt wird.

Zweckmäßig ist das Getriebe mit einem Schneckentrieb versehen, dessen Schnecke drehschlüssig mit der Abtriebswelle des Servomotors verbunden ist. Auf diese Weise ist wohl eine einfache Verstellung der Messerwelle vom Servomotor aus möglich, nicht aber eine unbeabsichtigte Verschiebung der Messerwelle.

Die Erfindung kann auch dazu ausgenutzt werden, einen zu starken Anpressdruck der Messer an der Lochplatte zu korrigieren. Ein solcher zu starker Arrpressdruck macht sich in der Überwachungseinrichtung ja durch einen das zulässige Intervall überschreitenden Wert der Betriebsgröße des Antriebsmotors bemerkbar und es braucht die Verstellvorrichtung bzw. ihr Servomotor nur so ausgebildet zu sein, dass auch eine Rückverstellung der Messerwelle problemlos möglich ist

Es ist im Rahmen der Erfindung auch denkbar, dass die Überwachungseinrichtung eine Anzeige- bzw. Signaleinrichtung und die Verstellvorrichtung für die Längsverstellung der Messerwelle gleichzeitig betätigt. Dies hätte den Vorteil, dass die automatische Verstellung der Messerwelle auch optisch oder akustisch angezeigt wird.

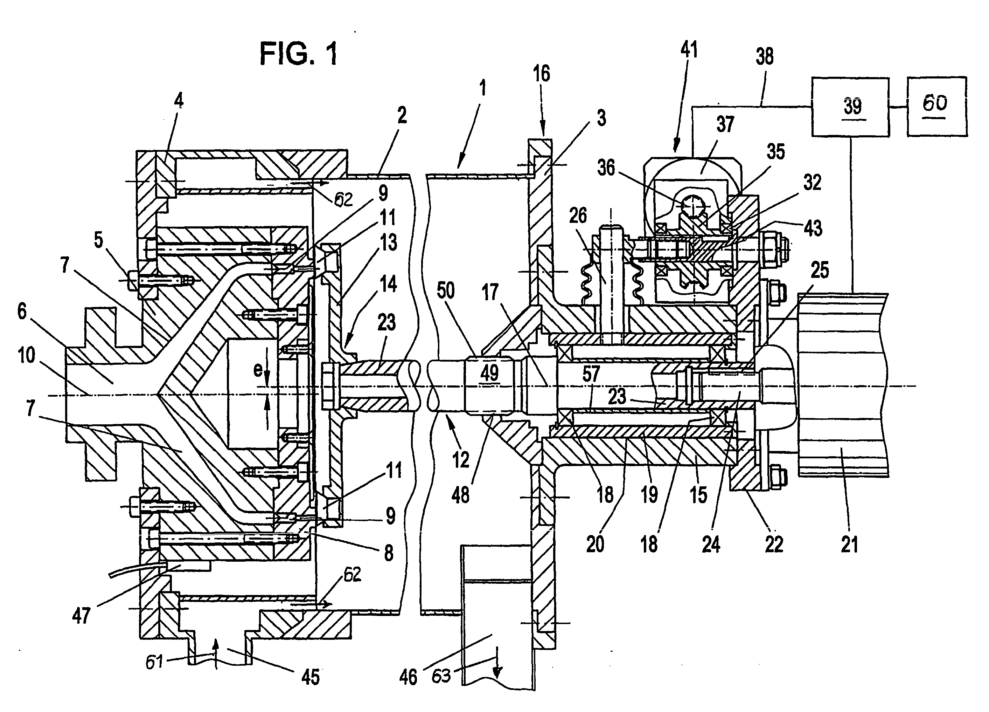

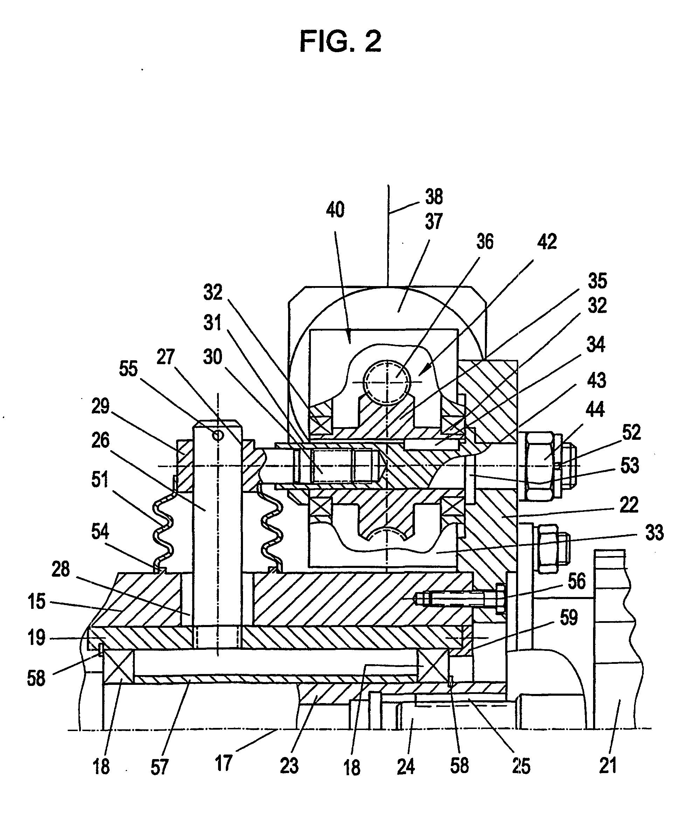

Weitere Kennzeichen und Vorteile der vorliegenden Erfindung ergeben sich aus der Beschreibung eines Ausführungsbeispieles, welches in der Zeichnung schematisch dargestellt ist. Fig. 1 zeigt einen Längsschnitt durch die Granuliervorrichtung mit daran angebauter Andrückeinrichtung, Fig. 2 ein Detail in größerem Maßstab.

Die Granuliervorrichtung hat in bekannter Weise ein Gestell 16, das ein Granuliergehäuse 1 trägt, das einen zylindrischen Mantel 2 aufweist, der an seinem einen Stirnende durch eine Stirnwand 3 und an seinem anderen Stimende durch das mit dem Düsenstock 4 verbundene Zulaufstück 5 abgeschlossen ist. Das Zulaufstück 5 hat einen Zulaufkanal 6 für das zu granulierende Material, an welchen Verzweigungsleitungen 7 angeschlossen sind, die zu den Düsen 9 des Düsenstockes 4 fuhren, durch welche das plastifizierte Kunststoffmaterial od.dgl. zur Granulierung austritt. Diese Düsen 9 sind in einer Lochplatte 8 im Kreis um die Achse 10 des Zulaufstüdces 5 verteilt angeordnet Die Lochplatte 8 ist an das Zulaufstück 5 angeschraubt. Die aus den Düsen 9 austretenden Stränge werden durch Messer 11 abgeschlagen, welche an radialen Armen 13 des Messerkopfes 14 einer Messerwelle 12 angeordnet sind. Die Welle 12 ist in einem als Stutzen 15 des Gestelles 16 ausgebildeten Lagergehäuse drehbar gelagert, der an die Stirnwand 3 des Granuliergehäuses 1 angeflanscht ist. Außerdem ist die Messerwelle 12 mittels einer Verstellvorrichtung 41 in Richtung ihrer Achse 17 in bezug auf das Gestell 16 längsverschieblich, um die Messer 11 jeweils mit dem gewünschten Druck an die Lochplatte 8 andrücken zu können. Hiefür ist die Welle 12 mittels Wälztagem 18 in einer Hülse 19 drehbar gelagert, die in einer zylindrischen Bohrung 20 des Stutzens 15 in ihrer Längsrichtung verschiebbar ist Die Verdrehung der Welle 12 um ihre Achse 17 erfolgt durch einen Motor 21, der an einen mittels Schrauben 56 mit dem Stutzen 15 verbundenen Flansch 22 angeschraubt ist. Um zu vermeiden, dass der Motor 21 die Längsverschiebung der Welle 12 mitmachen muss, ist die Welle 12 in zwei Abschnitte 23, 24 unterteilt, die miteinander drehschlüssig mittels eines Keiles 25 so verbunden sind, dass sich der Abschnitt 23 relativ zum Abschnitt 24 in Axialrichtung der Welle 12 bewegen kann, der Abschnitt 24 aber seine axiale Lage stets beibehält.

Die beiden Lager 18 der Messerwelle 12 sind voneinander durch eine Distanzhülse 27 in Abstand gehalten. Das linke Lager 18 ist mittels eines Sprengringes 58, der in die Hülse 19 eingesetzt ist, gehalten, das rechte Lager 18 hingegen mittels eines weiteren Sprengringes 58, der in den Wellenabschnitt 23 eingesetzt ist, und weiters durch einen Flansch 59, der an der Hülse 19 angeschraubt ist (Fig. 2).

Die Hülse 19 trägt einen Mitnehmer 26 in Form eines in die Hülse 19 eingeschraubten radialen Zapfens, der einen in Axialrichtung der Welle 12 verlaufenden Schlitz 28 des Stutzens 15 durchsetzt und in diesem Schlitz 28 geführt ist, welcher Schlitz 28 so lang ist, dass sich in ihm der Zapfen 26 für die in Frage kommenden Verstellwege des Wellenabschnittes 23 bewegen kann. Das freie Ende dieses Mitnehmers 26 liegt in einer Öffnung 27 des Kopfes 29 einer sich in Axialrichtung der Welle 12 erstreckenden Gewindespindel 30, die in eine Gewindehülse 31 eingeschraubt ist. Diese Gewindehülse 31 ist in einem Gehäuse 33 drehbar gelagert, das an den Flansch 22 angeschraubt ist. Die Gewindehülse 31 trägt an ihrer Mantelfläche einen Keil 34, der in eine Längsnut der mittigen Öffnung des Schneckenrades 35 eines Schneckentriebes 42 eingreift, sodass das Schneckenrad 35 mit der Gewindehülse 31 drehschlüssig verbunden ist. Das mittels Lagern 32 im Gehäuse 33 drehbar gelagerte und durch die Lager 32 gegen Axialverschiebung gesicherte Schneckenrad 35 kämmt mit einer Schnecke 36, die mit der Abtriebswelle eines Servomotors 37 drehschlüssig verbunden ist, der am Gehäuse 33 befestigt ist. Der Servomotor 37 wird für eine automatische Nachstellung des Messerkopfes 14 über eine Leitung 38 von einer Steuereinheit einer Überwachungseinrichtung 39 (Fig. 1) angespeist, die ihrerseits mit dem Motor 21 über eine Leitung 40 verbunden ist. Die Überwachungseinrichtung 39 fühlt eine Betriebsgröße des Motors ab, zweckmäßig das vom Motor aufzubringende Drehmoment oder seine Stromaufnahme. Dieses Drehmoment bzw. der analoge Amperewert hängt davon ab, mit welchem Druck die Messer 11 über die Stirnfläche der Lochplatte 8 schleifen. Fällt der Wert dieser überwachten Betriebsgröße des Motors 21, etwa infolge Messerabnutzung, unter einen vorbestimmten, an der Steuereinheit der Überwachungseinrichtung 39 eingestellten Wert, so speist die Überwachungseinrichtung 39 über die Leitung 38 den Servomotor 37 der Verstellvorrichtung 41 so an, dass über das von den Baulteilen 26 bis 36 gebildete Getriebe 40 die Hülse 19 in Richtung zur Lochplatte 8 verschoben wird, sodass die Messer 11 stärker an die Lochplatte 8 angedrückt werden. Hierbei nimmt die Hülse 19 über die Wälzlager 18 den Wellenabschnitt 23 in Axialrichtung mit. Die Keilverbindung 25 sorgt dafür, dass diese Axialbewegung vom Wellenabschnitt 24 nicht mitgemacht wird. Erreicht das vom Motor 21 aufzubringende Drehmoment bzw. seine Stromaufnahme wieder den vorbestimmten Wert, so wird der einen Stellmotor bildende Servomotor 37 von der Überwachungseinrichtung 39 wieder stillgesetzt.

Die Übertragung der Drehzahl der Abtriebswelle des Servomotors 37 über ein Schneckengetriebe und die Gewindeverbindung zwischen Gewindespindel 30 und Gewindehülse 31 gewährleisten eine sehr feine Verstellmöglichkeit für die Messer 11 und damit eine Feinregelung des Anpressdruckes, sowie die Möglichkeit, handelsübliche Bauteile zu verwenden. Außerdem wirkt die Kupplung zwischen Schneckenrad 35 und Schnecke 36 selbsthemmend derart, dass die Hülse 19 und damit der die Messer tragende Wellenabschnitt 23 sich nicht unbeabsichtigt in Axialrichtung bewegen können. Um eine möglichst gleichmäßige Abnützung der Messer 11 Ober deren gesamte Schneidkantenlänge zu erzielen, kann die Anordnung so getroffen werden, dass die Achse 17 der Messerwelle 12 um eine Exzentrizität e so exzentrisch liegt in bezug auf die Achse 10 der Lochplatte 8 bzw. zum Mittelpunkt des Kreises, auf welchem die Düsen 9 angeordnet sind, dass die gesamte Schneidenlänge der Messer 11 ausgenützt wird. Dadurch wird eine längere Standzeit der Messer 11 erreicht.

Eine Verlängerung der Gewindehülse 31 durchsetzt eine Öffnung 43 des Flansches 22 und trägt außen ein Gewinde, auf welches eine Mutter 44 aufgeschraubt und mittels eines Splints 52 gesichert ist. Ferner trägt die Gewindehülse 31 einen Bund 53, der zusammen mit der Mutter 44 die Axiallage der Gewindehülse 31 in bezug auf den Flansch 22 sichert. Eine Voreinstellung der Axiallage der Gewindehülse 31 und damit der Messerwelle 12 ist dennoch nach Wunsch möglich, wenn der Mitnehmer 26 aus der Hülse 19 herausgeschraubt und aus der Öffnung 27 herausgezogen wird. Die Gewindespindel 30 lässt sich dann in der Gewindehülse 31 verdrehen, was eine Änderung der axialen Lage der Öffnung 27 und damit der Messerwelle 12 zur Folge hat, wenn der Mitnehmer 26 wieder in die Öffnung 27 eingesetzt wird.

Das freie Ende des Mitnehmers 26 trägt ein Loch 55, in welches ein Bolzen eingesetzt werden kann, um das Ein- oder Ausschrauben des Mitnehmers 26 in bzw. aus der Hülse 19 zu erleichtern.

An die Überwachungseinrichtung 39 kann eine Anzeige- bzw. Signaleinrichtung 60 angeschlossen sein, welche optisch und/oder akustisch anzeigt, dass der Anpressdruck des Messerkopfes 14 bzw. der von ihm getragenen Messer 11 an die Lochplatte 8 nicht im vorbestimmten, an der Überwachungseinrichtung 39 eingestellten Intervall liegt. Im Falle der beschriebenen automatischen Nachstellung der Messerwelle 12 zeigt also diese Anzeigeoder Signaleinrichtung 60 an, dass eine automatische Nachstellung im Gange ist und ihr Signal erlischt, sobald die Nachstellung den gewünschten Erfolg hat, cl.h., das gewünschte Andruckintervall der Messer 11 an der Lochplatte 8 wieder erreicht ist bzw. die diesem Intervall entsprechende Größe der überwachten Betriebsgröße des Motors 21.

Um zusätzlich zur automatischen Nachstellung der Messerwelle 12 auch eine händische Verstellung derselben zu ermöglichen, kann ein nicht dargestelltes Handrad mit der Schnecke 36 verbunden sein, durch welches eine axiale Verstellung des die Messer 11 tragenden Abschnittes 23 der Messerwelle 12 in analoger Weise wie bei der automatischen Verstellung erfolgen kann.

In das Granuliergehäuse 1 mündet in bekannter Weise eine Kühlmittelzuleitung 45, zweckmäßig für Wasser, welches Kühlmittel in Richtung des Pfeiles 61 zuströmt und aus nicht dargestellten Verzweigungsleitungen in Richtung der Pfeile 62 in den Bereich der Düsen 9 eingespritzt wird. Die von den Messern 11 abgeschlagenen linsen- oder zylinderförmigen Granulatteilchen werden dadurch sofort nach dem Austritt aus den Düsen 9 gekühlt und zusammen mit dem Kühlmittel über einen Auslass 46 aus dem Granuliergehäuse 1 in Richtung des Pfeiles 63 abgeführt. Die Temperatur im Zulaufstück 5 kann durch einen Fühler 47 überwacht werden. Um zu vermeiden, dass durch die Öffnung 48 der Stirnwand 3, durch welche die Messerwelle 12 hindurchgeführt ist, Kühlmittel in den Bereich der Lagerung der Messerwelle 12 gelangt, ist der in dieser Öffnung 48 liegende Abschnitt 49 mit einem Rückfördergewinde 50 versehen, das bei der Umdrehung der Messerwelle 12 eine Förderwirkung in Richtung zum Messerkopf 14 hat.

Ein den Mitnehmer 26 umgebender, auf den Stutzen 15 aufgesetzter und an ihm durch einen Ring 54 gehaltener Balg 51 verhindert, dass Verunreinigungen durch den Schlitz 28 in das Innere des Stutzens 15 gelangen können.

Bei Inbetriebnahme der Vorrichtung ist es zweckmäßig, nach Öffnen des Granuliergelhäuses 1 den verschiebbaren Messerwellenabschnitt 23 mit dem von ihm getragenen Messerkopf 14 in eine Ausgangsposition so in Richtung zum Motor 21 zu verschieben, dass die Messer 11 nicht an der Lochplatte 8 anliegen. Bei Wiederschließen des Granuliergehäuses 1 kommt es daher zunächst zu keiner definitiven Anpresskraft, sondern es besteht zwischen Messern 11 und Lochplatte 8 ein Spalt. Sobald jedoch der Motor 21 angespeist und die Messerwelle 12 verdreht wird, stellt die Überwachungseinrichtung 39 fest, dass die Betriebsgröße, insbesondere das Drehmoment des Motors 21 zu gering ist und verschiebt dadurch über das Getriebe 40 den verschiebbaren Messerwellenabschnitt 23 in Richtung zur Lochplatte 8 so lange, bis die Messer 11 mit dem gewünschten Anpressdruck an die Lochplatte 8 anliegen bzw. das dadurch bewirkte Drehmoment des Motors 21 im vorbestimmten Intervall liegt. Wird - aus was für Gründen immer - der Anpressdruck der Messer 11 zu groß, so steigt die überwachte Betriebsgröße des Motors 21, z.B. das von ihm aufzubringende Drehmoment, über das vorbestimmte Intervall hinaus, sodass die Überwachungseinrichtimg 39 mittels der Verstellvorrichtung 41 den Messerkopf 14 um das erforderliche Maß zurückzieht.

Auch für die zuvor beschriebene händische Verstellung der Messerwelle 12 zeigt die Überwachungseinrichtung 39 an, ob der Messeranpressdruck im zulässigen Intervall liegt oder nicht.

Die beschriebene Einrichtung ist nicht nur für die Granulierung von Kunststoffmaterial anwendbar, sondern auch auf andere pastöse Massen, welche beim Austritt aus Düsen durch Messer in einzelne Teilchen unterteilt werden, z.B. Lebensmittelmassen, wie Teigwaren oder Müsli usw.

## Patentansprüche

1. Einrichtung an Granuliervorrichtungen, insbesondere für Kunststoffmaterial, zur Andrückung zumindest eines von einer zur Drehbewegung um ihre Achse (17) von einem Motor (21) angetriebenen Welle (12) getragenen und um diese Achse (17) umlaufenden Messers (11) an die Lochplatte (8) der Granuliervorrichtung, wobei zumindest der das oder die Messer (11) tragende Abschnitt (23) der Welle (12) in ihrer Achsrichtung längsverschiebbar gelagert ist und eine Überwachungseinrichtung (39) für eine von der Messerandrückung an die Lochplatte (8) abhängige Betriebsgröße des Motors (21) vorgesehen ist, und wobei an diese Überwachungseinrichtung (39) eine Verstellvorrichtung (41) zur Längsverschiebung der Messerwelle (12) angeschlossen ist, **dadurch gekennzeichnet, dass** die Verstellvorrichtung (41) einen Servomotor (37) aufweist, dessen Abtriebswelle über ein Getriebe (40) mit der die Messer (11) tragenden Welle (12) zu deren Nachstellung bei Messerabnützung verbunden ist.

2. Einrichtung nach Anspruch 1, **dadurch gekennzeichnet, dass** die Betriebsgröße das vom Motor (21) aufzubringende Drehmoment oder seine Stromaufnahme ist

3. Einrichtung nach Anspruch 1 oder 2, **dadurch gekennzeichnet, dass** der das oder die Messer (11) tragende Wellenabschnitt (23) in einer Hülse (19) drehbar gelagert ist, die in einem Stutzen (15) eines Gestelles (16) längsverschiebbar gelagert ist und über das Getriebe (40) vom Servomotor (37) verstellt wird.

4. Einrichtung nach Anspruch 3, **dadurch gekennzeichnet, dass** der Stutzen (15) an ein Granuliergehäuse (1) angeschlossen ist.

5. Einrichtung nach einem der Ansprüche 1 bis 4, **dadurch gekennzeichnet, dass** das Getriebe (40) einen Schneckentrieb (42) aufweist, dessen Schnecke (36) drehschlüssig mit der Abtriebswelle des Servomotors (37) verbunden ist.

6. Einrichtung nach einem der Ansprüche 3 bis 5, **dadurch gekennzeichnet, dass** ein mit der Hülse (19) verbundener Mitnehmer (26) einen in Axialrichtung der Welle (12) verlaufenden Schlitz (28) des Stutzens (15) durchsetzt, in dieser Richtung in diesem Schlitz (28) geführt ist und zur Verstellung in dieser Richtung mit dem Getriebe (40) verbunden ist.

7. Einrichtung nach einem der Ansprüche 3 bis 6, **dadurch gekennzeichnet, dass** die Hülse (19), vorzugsweise über den Mitnehmer (26), mit einer sich in Axialrichtung der Welle (12) erstreckenden Gewindespindel (30) verbunden ist, die in eine Gewindehülse (31) des Getriebes (40) eingeschraubt ist.

8. Einrichtung nach Anspruch 7, **dadurch gekennzeichnet, dass** die Gewindehülse (31) drehsclhlüssig mit dem Schneckenrad (35) des Schneckentriebes (42) verbunden ist.

9. Einrichtung nach einem der Ansprüche 6 bis 8, **dadurch gekennzeichnet, dass** der Mitnehmer (26) von einem den Schlitz (28) der Hülse (19) abdeckenden Balg (51) umgeben ist.

10. Einrichitung nach einem der Ansprüche 1 bis 9, **dadurch gekennzeichnet, dass** die Welle (12) eine Stirnwand (3) eines Granuliergehäuses (1) durchsetzt und im Bereich der Stirnwand (3) ein Rückfördergewinde (50) aufweist, welches bei der Drehung der Welle (12) das Kunststoffmaterial zurück in das Granuliergehäuse (1) fördert.

11. Einrichtung nach einem der Ansprüche 1 bis 10, **dadurch gekennzeichnet, dass** die Welle (12) in zwei Abschnitte (23, 24) unterteilt ist, die drehschlüssig miteinander verbunden, relativ zueinander jedoch in Axialrichtung der Welle (112) verschieblich sind, wobei der eine Abschnitt (24) an seinem Stirnende mit dem ortsfesten Motor (21) drehschlüssig verbunden ist, wogegen der andere Abschnitt (23) die Messer (11) trägt.

12. Einrichtung nach einem der Ansprüche 1 bis 11, **dadurch gekennzeichnet, dass** die Achse (17) der Welle (12) exzentrisch in bezug auf den Mittelpunkt des Lochkreises der Lochplatte (8) (Achse 10) gelagert ist.

13. Einrichtung nach einem der Ansprüche 1 bis 12, **dadurch gekennzeichnet, dass** die Anzeige- oder Signaleinrichtung (60) optisch und/oder akustisch ist.

## Claims

1. Device on granulating apparatuses, in particular for plastics material, for pressing at least one knife (11), which is carried by a shaft (12) driven to rotate about its axis (17) by a motor (21) and which rotates about this axis (17), against the apertured plate (8) of the granulating apparatus, at least the section (23) of the shaft (12) which carries the knife or knives (11) being mounted longitudinally displaceably in the axial direction of the shaft and a monitoring device (39) for an operating quantity of the motor (21), which quantity is dependent on the force with which the knives are pressed against the apertured plate (8), being provided, and an adjusting device (41) for the longitudinal displacement of the knife shaft (12) being connected to this monitoring device (39), **characterised in that** the adjusting device (41) has a servo motor (37), the output shaft of which is connected via gearing (40) to the shaft (12) carrying the knives (11) for its resetting in the event of knife wear.

2. Device according to Claim 1, **characterised in that** the operating quantity is the torque to be produced by the motor (21) or its current consumption.

3. Device according to Claim 1 or 2, **characterised in that** the shaft section (23) carrying the knife or knives (11) is rotatably mounted in a sleeve (19) which is longitudinally displaceably mounted in a stub (15) of a frame (16) and is adjusted by the servo motor (37) via the gearing (40).

4. Device according to Claim 3, **characterised in that** the stub (15) is connected to a granulating housing (1).

5. Device according to one of Claims 1 to 4, **characterised in that** the gearing (40) has a worm drive (42), the worm (36) of which is connected in a rotationally locked manner to the output shaft of the servo motor (37).

6. Device according to one of Claims 3 to 5, **characterised in that** a driver (26) connected to the sleeve (19) passes through a slot (28) in the stub (15) running in the axial direction of the shaft (12), is guided in this direction in this slot (28) and is connected to the gearing (40) for adjustment in this direction.

7. Device according to one of Claims 3 to 6, **characterised in that** the sleeve (19) is connected, preferably via the driver (26), to a threaded spindle (30) extending in the axial direction of the shaft (12) and screwed into a threaded sleeve (31) of the gearing (40).

8. Device according to Claim 7, **characterised in that** the threaded sleeve (31) is connected in a rotationally locked manner to the worm wheel (35) of the worm drive (42).

9. Device according to one of Claims 6 to 8, **characterised in that** the driver (26) is surrounded by bellows (51) covering the slot (28) in the sleeve (19).

10. Device according to one of Claims 1 to 9, **characterised in that** the shaft (12) passes through an end wall (3) of a granulating housing (1) and, in the region of the end wall (3), has a conveying-back thread (50) which conveys the plastics material back into the granulating housing (1) upon the rotation of the shaft (12) .

11. Device according to one of Claims 1 to 10, **characterised in that** the shaft (12) is subdivided into two sections (23, 24) which are connected to one another in a rotationally locked manner, but are displaceable relative to one another in the axial direction of the shaft (12), the one section (24) being connected at its end face in a rotationally locked manner to the stationary motor (21), whereas the other section (23) carries the knives (11).

12. Device according to one of Claims 1 to 11, **characterised in that** the axis (17) of the shaft (12) is mounted eccentrically with respect to the centre of the aperture circle of the apertured plate (8) (axis 10).

13. Device according to one of Claims 1 to 12, **characterised in that** the indicating or signalling device (60) is optical and/or acoustic.

## Revendications

1. Dispositif équipant des dispositifs de granulation, notamment pour matières plastiques, pour presser au moins une lame (11) qui est portée par un arbre (12) entraîné en rotation autour de son axe (17) par un moteur (21), et qui tourne autour dudit axe (17) contre la plaque perforée (8) du dispositif de granulation, sachant qu'au moins le segment (23) de l'arbre (12) portant la ou les lames (11) est monté de manière à être mobile longitudinalement dans la direction axiale et qu'un dispositif de surveillance (39) est prévu pour une grandeur de fonctionnement du moteur (21) qui dépend de l'application des lames contre la plaque perforée (8), et sachant qu'un dispositif de déplacement (41) est relié audit dispositif de surveillance (39) pour déplacer longitudinalement l'arbre (12) des lames, **caractérisé en ce que** le dispositif de déplacement (41) comprend un servomoteur (37) dont l'arbre de sortie est relié via une transmission (40) à l'arbre (12) portant les lames (11) afin de l'ajuster en cas d'usure des lames.

2. Dispositif selon la revendication 1, **caractérisé en ce que** la grandeur de fonctionnement est le couple à fournir par le moteur (21) ou son courant absorbé.

3. Dispositif selon la revendication 1 ou 2, **caractérisé en ce que** le segment d'arbre (23) portant la ou les lames (11) est monté de façon rotative dans une douille (19) qui est montée de façon mobile longitudinalement dans un manchon (15) d'un bâti (16) et qui est déplacée par le servomoteur (37) via la transmission (40).

4. Dispositif selon la revendication 3, **caractérisé en ce que** le manchon (15) est raccordé à un boîtier de granulation (1).

5. Dispositif selon l'une des revendications 1 à 4, **caractérisé en ce que** la transmission (40) présente un engrenage à vis sans fin (42) dont la vis sans fin (36) est reliée de façon solidaire en rotation à l'arbre de sortie du servomoteur (37).

6. Dispositif selon l'une des revendications 3 à 5, **caractérisé en ce qu'**un toc d'entraînement (26) relié à la douille (19) traverse une fente (28) du manchon (15) qui s'étend dans la direction axiale de l'arbre (12), est guidé dans cette direction dans ladite fente (28) et est relié à la transmission (40) pour le déplacement dans cette direction.

7. Dispositif selon l'une des revendications 3 à 6, **caractérisé en ce que** la douille (19) est reliée, de préférence par le biais du toc d'entraînement (26), à une broche filetée (30) s'étendant dans la direction de l'axe de l'arbre (12), qui est vissée dans une douille taraudée (31) de la transmission (40).

8. Dispositif selon la revendication 7, **caractérisé en ce que** la douille taraudée (31) est reliée de façon solidaire en rotation avec la roue tangente (35) de l'engrenage à vis sans fin (42).

9. Dispositif selon l'une des revendications 6 à 8, **caractérisé en ce que** le toc d'entraînement (26) est entouré par un soufflet (51) recouvrant la fente (28) de la douille (19).

10. Dispositif selon l'une des revendications 1 à 9, **caractérisé en ce que** l'arbre (12) traverse une paroi frontale (3) d'un boîtier de granulation (1) et présente dans la zone de la paroi frontale (3) un filetage de refoulement (50) qui, lorsque l'arbre (12) tourne, ramène la matière plastique dans le boîtier de granulation (1).

11. Dispositif selon l'une des revendications 1 à 10, **caractérisé en ce que** l'arbre (12) est divisé en deux segments (23, 24) qui sont assemblés de façon solidaire en rotation, mais néanmoins mobiles l'un par rapport à l'autre dans la direction de l'axe de l'arbre (12), sachant que l'un des segments (24) est relié de façon solidaire en rotation par son extrémité frontale au moteur fixe (21), alors que l'autre segment (23) porte les lames (11).

12. Dispositif selon l'une des revendications 1 à 11, **caractérisé en ce que** l'axe (17) de l'arbre (12) est monté de façon excentrée par rapport au milieu du cercle perforé de la plaque perforée (8) (axe 10).

13. Dispositif selon l'une des revendications 1 à 12, **caractérisé en ce que** le dispositif d'avertissement ou de signalisation (60) est optique et/ou acoustique.
